# EUROPEAN PATENT SPECIFICATION

(11) **EP 1 268 867 B1**
(45) Date of publication and mention of the grant of the patent: **01.12.2004**
(21) Application number: 01910235.9
(22) Date of filing: 12.02.2001
(51) Int. Cl.: C22B 43/00, C22B 7/00, C22B 1/00, C22B 3/02, A62D 3/00, B09C 1/02

(54) **METHOD AND A PLANT FOR REMOVING MERCURY CONTAMINATION FROM METAL WITH A REDUCING LIQUID**
VERFAHREN UND ANLAGE ZUR ENTFERNUNG VON QUECKSILBERKONTAMINATION AUS METALLEN UNTER VERWENDUNG EINES FLÜSSIGEN REDUKTIONSMITTELS
PROCEDE ET UNITE DESTINES A ELIMINER D'UN METAL DES IMPURETES DE MERCURE AU MOYEN D'UN LIQUIDE REDUCTEUR

(30) Priority: 11.02.2000 NL 1014363
(43) Date of publication of application: 02.01.2003
(73) Proprietor: PRO/MIBO VOF, 7642 VN Wierden (NL)
(72) Inventor: PEDDEMORS, Neeltje, Aleida, NL-7642 VN Wierden (NL); TIJHUIS, Willem, NL-7475 SX Markelo (NL)
(74) Representative: Prins, Hendrik Willem
(86) International application number: PCT/NL2001/000116
(87) International publication number: WO 2001/061061

(56) References cited:
- DD-A- 260 917
- DD-A- 263 967
- DE-A- 4 234 447
- US-A- 4 124 459
- US-A- 5 106 598
- DATABASE WPI Section Ch, Week 198749 Derwent Publications Ltd., London, GB; Class J03, AN 1987-346670 XP002149599 & SU 1 305 197 A (BARMASHENKO V I), 23 April 1987 (1987-04-23)
- PATENT ABSTRACTS OF JAPAN vol. 009, no. 017 (C-262), 24 January 1985 (1985-01-24) & JP 59 166288 A (UNITIKA KK), 19 September 1984 (1984-09-19)

## Description

The present invention relates to a method and to a plant for removing mercury impurities from metal.

Metal which has come into contact with mercury-containing gases or liquids, such as natural gas condensate, have to be cleaned of the mercury as a result of this being absorbed in the metal. This generally means that the metal is melted down in a.melting furnace and the mercury is separated by mercury condensation. This is a process which uses much energy and, as a consequence of being melted down, the metal can moreover no longer be used in its original form.

SU 1305197 A discloses a method of treating mercury-contaminated Ru-Ti oxide anodes to remove the mercury, comprising the steps of inmersing the oxide anodes in a bath of a Na₂SO₃ solution and washing them.

The present invention has for its object to provide a method and plant for removing mercury impurities from metal which substantially does not have the above stated drawbacks, while the mercury impurities in the metal are reduced appreciably, for instance from 15-70 mg/cm² to less than 0.010 mg/cm². The process moreover has the advantage that substantially no (mercury) vapours are therein created, whereby the process is also less complicated.

The method for removing mercury impurities from metal is characterized in that it comprises the steps of:
- treating the metal surface with a liquid containing a reducing agent; and
- rinsing the treated metal.

The invention is based on the insight that the mercury present in the metal can be removed therefrom in relatively simple manner (not via the gas phase) by making use of liquid containing a reducing agent.

It is recommended to spray the metal with the reducing agent so that adhered impurities and impurities released from the metal can be easily removed. In addition, it is recommended to immerse the metal temporarily in the liquid containing a reducing agent. This has the additional advantage that, if an electrolysis must also be carried out, this electrolysis can take place while the metal is immersed in the liquid containing a reducing agent. In order to improve the activity of the reducing agent it is recommended to apply the liquid containing the reducing agent at increased temperature. These temperatures can lie above 100°C but, in order to avoid vapour formation as far as possible, this leads to a treatment under increased pressure. It is therefore recommended that the liquid containing a reducing agent has a temperature of 30-100°C, for instance 60-95°C, more preferably 75-90°C. An optimal practical temperature lies in the range of 81 to 83°C. It has moreover been established that by making use of this increased temperature the mercury exudates from the metal.

In order to cause the mercury cleaning to penetrate more deeply or to accelerate the cleaning, it is recommended that the metal treated with reducing agent be subjected to an electrolysis. In particular embodiments the electrolysis is performed at a negative (preferably direct) voltage of -10 to -80 V, preferably - 20 to -60 V, more preferably -30 to -50 V. The power used lies in the order of 200-2000 watt, preferably 500-1000 watt. The electrolysis can be performed in one treatment or in a number of partial treatments or pulses (2-30 pulses, preferably 5-20 pulses). Each pulse can be of 1-20, preferably 2-10 seconds. The total time duration lies in the order of 0.5-60 minutes, more preferably 1-50 minutes, such as 5-30 minutes. The chosen values for the voltage, number of pulses and time duration depend on the degree of mercury contamination.

In order to avoid as far as possible the method producing large quantities of contaminated residual liquids, it is further recommended that the liquid containing a reducing agent and the rinsing liquid are cleaned and reused. A good cleaning is obtained with relatively simple means and treatments if the cleaning takes place by flocculation and sedimentation.

An optimum reducing agent is found to be sulphite, in particular sodium sulphite. This sulphite can optionally be used in combination with a sulphide such as sodium sulphide. The relative mol ratio lies between 10:1 and 1:1, preferably 7:1 and 3:1, such as 5:1. The reducing agent can be applied in relatively low concentrations such as 1-30% by weight, preferably 5-20% by weight, such as 10-15% by weight. In the case of sodium sulphite temperatures around 80-85°C are sufficient to achieve a good result within a time period of one hour.

Another aspect of the invention relates to plant for removing mercury impurities from metal. This plant comprises according to the invention:
- a treatment tank for treating the metal;
- means for treating the metal with liquid containing a reducing agent and with rinsing liquid; and
- tanks for receiving the liquid containing the reducing agent and the rinsing liquid.

As stated above, it is further recommended that the plant comprises means for performing an electrolysis in the treatment tank, and/or spraying means for spraying liquid on the metal and/or means for immersing the metal in the liquid containing a reducing agent.

As mentioned above, a wide range of metals can be cleaned with the method and plant according to the invention.

Contaminated objects can for instance be processed to metal scrap which is then subjected to the method. It is however also possible to not first process objects to scrap but to subject them to the method as they are. Gas compressors and components such as housings thereof can be envisaged in this case. It is furthermore possible to treat liquid tanks which have been contaminated with mercury as a result of the contents held therein. Of particular interest in this case is a liquid tank which is used to transport natural gas condensate.

The metal will generally be placed as scrap or as object parts in a tank which is then subjected in closed state to the different treatment steps according to the invention.

Mentioned and other features of the method and plant according to the invention will be further elucidated hereinbelow on the basis of two embodiments which are given only by way of example without the invention being deemed limited thereto. Reference is herein made to the annexed drawings, in which:
figure 1 shows a flow diagram of a method and plant according to the invention for removing mercury from metal;

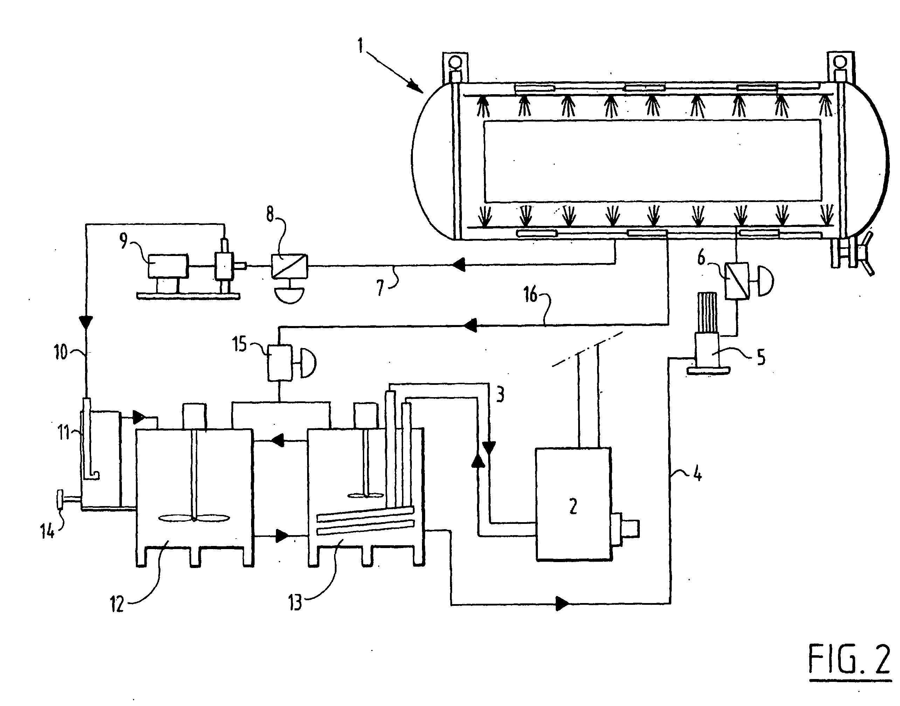

figure 2 is a flow diagram showing the treatment of metal with liquid containing a reducing agent;
figure 3 shows a flow diagram of the electrolysis process;
figure 4 shows a flow diagram of the rinsing treatment; and
figure 5 shows a variant of the process shown in figure 1.

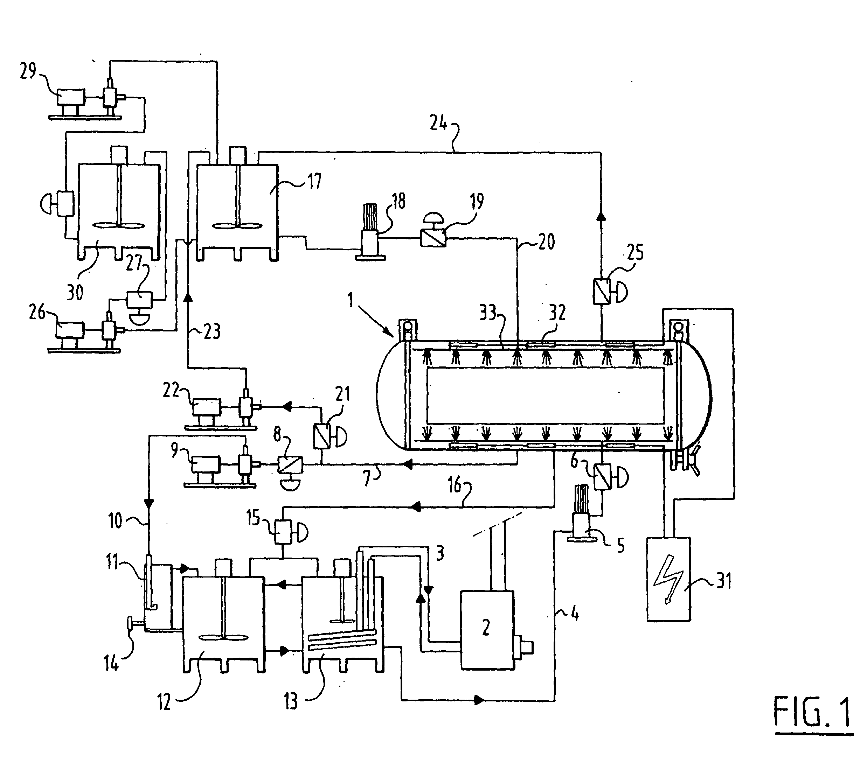

Figure 1 shows an overview of the method and plant according to the invention for removing mercury from metal, in particular metal objects. The plant comprises a tank 1 which is provided at both its ends with displaceable walls whereby metal objects can be disposed in baskets or as such in tank 1. After the arrangement in tank 1, the treatment with liquid containing a reducing agent is carried out first.

Tanks 12 and 13 contain the liquid containing a reducing agent, in this case sodium sulphite in a concentration of 11% by weight. Tank 13 is provided with a heating spiral through which a liquid heated in heating unit 2 flows via conduits 13. The liquid containing a reducing agent is fed from tank 13 to the spray pipes 33 disposed in tank 1 via the conduit 4 and high-pressure pump 5, at a pressure of for instance 120 bar, and valve 6.

The metal is sprayed under high pressure with liquid containing a reducing agent which via return conduit 7 is subsequently drained to a separating tank 11 via valve 8, pump 9 and conduit 10. Solids, including mercury compounds, are separated in separating tank 11 by sedimentation. The liquid is collected in tank 12 which is connected for liquid communication to tank 13. Tank 1 is likewise connected via a vapour line 16 and valve 15 to the two tanks 12 and 13. Spraying of the metal in tank 1 is carried out for roughly 30 minutes. The liquid containing a reducing agent herein retains its set temperature of about 82°C.

Return conduit 7 is then closed with valve 8 and tank 1 fills to a liquid level of about 80% of the tank volume so that all the metal for cleaning is immersed. The high-pressure pump 5 remains energized so that a rinsing movement is maintained in the liquid containing a reducing agent in tank 1. Once the desired liquid level has been reached in tank 1, liquid is again pumped via return conduit 7 to tanks 12 and 13 while mercury compounds formed in tank 11, such as mercury oxide and quicksilver, are separated. This treatment lasts about 40 minutes.

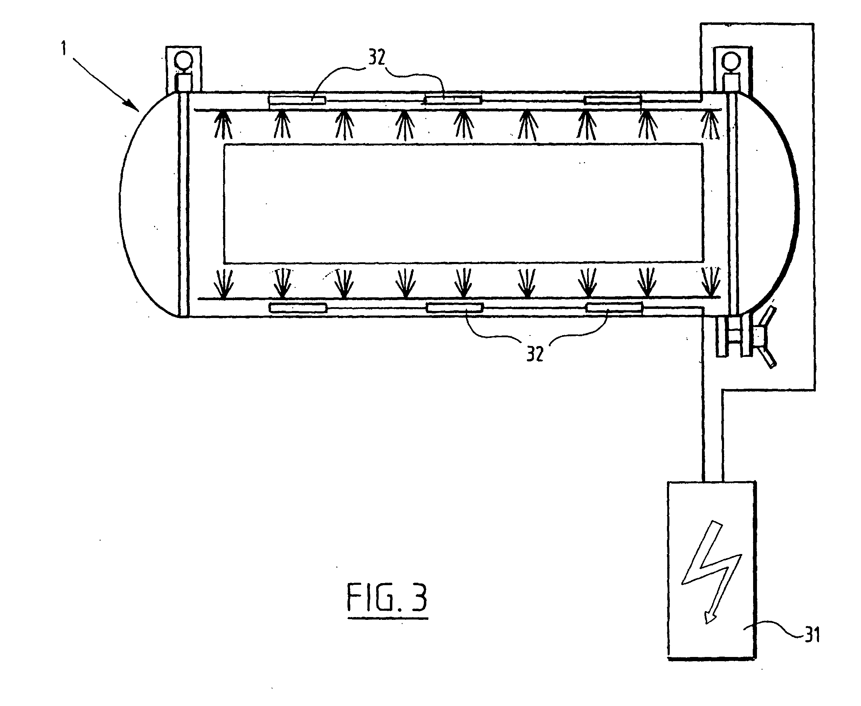

Electrolysis then takes place as shown in figure 3.

Electrodes 32 are disposed in tank 1. Using voltage source 31 a negative direct current at a voltage of 40 V is introduced into the liquid containing a reducing agent in tank 1. This electrolysis is performed for 15 minutes. The liquid is then drained from tank 1 via return conduit 7 and further rinsing takes place with liquid containing a reducing agent from tank 13 in order to discharge as many mercury impurities as possible from the metal arranged in tank 1.

This electrolysis has the purpose of largely removing from the metal the mercury present therein. During the electrolysis oxygen is formed which additionally oxidizes the mercury impurities. The electrolysis process is performed for about 15 minutes.

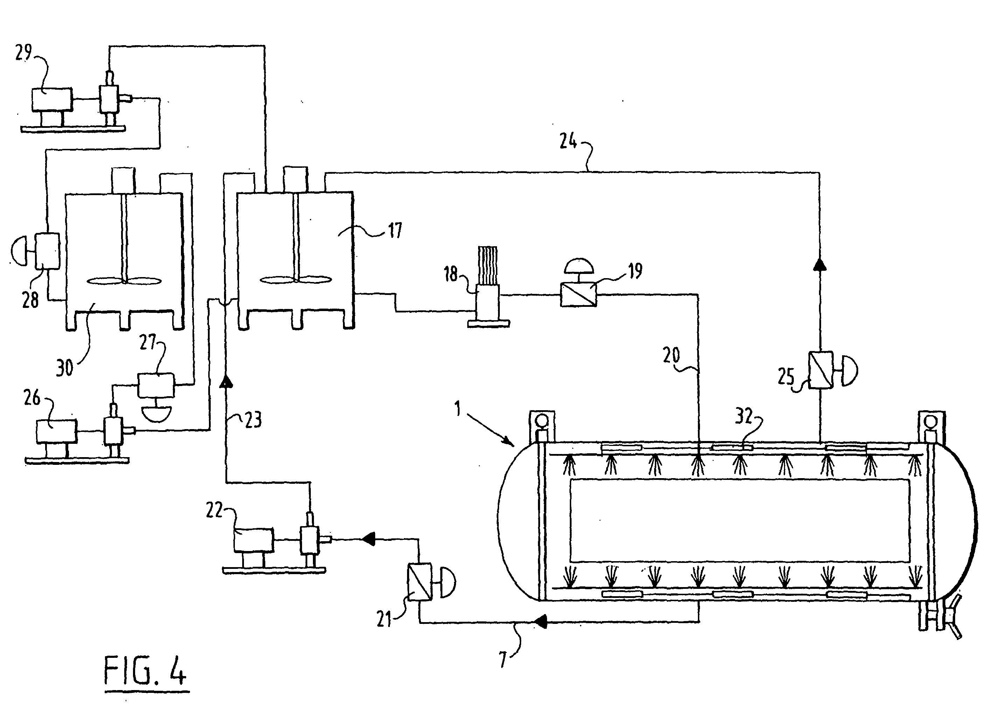

Finally, the treated metal is rinsed in order to discharge residues of mercury impurities released from the metal. This rinsing process is shown in detail in figure 4. Water is supplied from clean water tank 17 via high-pressure pump 18, valve 19 and conduit 20 to the spray tubes disposed in tank 1. The water is fed back to tank 17 via conduit 7, valve 21, pump 22 and conduit 23. This rinsing process lasts about 20 minutes. Provided for cleaning of the cleaning liquid is a tank 30 for treating the rinsing water. Water is fed from tank 17 via pump 26 and valve 27 to the tank 30 to which a flocculant, such as iron (III) chloride, is added. A coagulation is performed by increasing the pH to a value of for instance 7.5 to 8.5. The cleaned water is fed back via pump 29 to tank 17. The liquid can optionally be transferred in a manner not shown from tank 30 to tank 11 in order to carry out a sedimentation, possibly in the presence of further added polyelectrolyte.

The cleaning liquid, i.e. the sulphite liquid, can likewise be cleaned in a manner not shown in the tank 30.

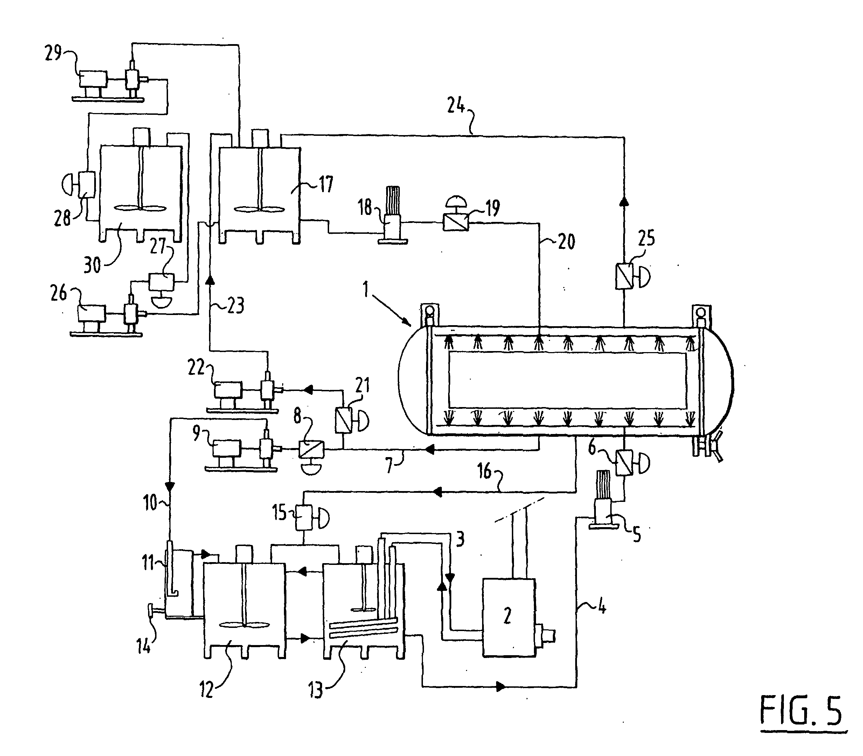

Finally, figure 5 shows a method and plant corresponding with figure 1 for cleaning metal. In this case the electrolysis process is omitted because an adequate cleaning can take place by means of the treatment with the liquid containing a reducing agent.

It has been determined from experiments that, starting from metal with mercury impurities of 15 to 70 mg/cm² in the process of figure 1, a decrease in the mercury concentration to less than 0.010 mg/cm² can be achieved.

It was possible using the process of figure 5 to achieve the same result with metal having a lower initial concentration of mercury impurities.

## Claims

1. Method for removing mercury impurities from metal, comprising the steps of:
- treating the metal surface with a liquid containing a reducing agent; and
- rinsing the treated metal.

2. Method as claimed in claim 1, wherein the metal is immersed in the liquid containing a reducing agent.

3. Method as claimed in claim 1 or 2, wherein the metal is sprayed with the liquid containing a reducing agent.

4. Method as claimed in claims 1-3, wherein the liquid containing a reducing agent has a temperature of 30-100°C, for instance 60-95°C, more preferably 75-90°C.

5. Method as claimed in claims 1-4, wherein the metal treated with reducing agent is subjected to an electrolysis.

6. Method as claimed in claim 5, wherein the electrolysis is performed at a negative voltage of -10 to -80 V, preferably -20 to -60 V, more preferably -30 to-50 V for preferably 5-60 minutes, more preferably 10-50 minutes, such as 10-30 minutes.

7. Method as claimed in claims 1-6, wherein the liquid containing a reducing agent and the rinsing liquid are cleaned and reused.

8. Method as claimed in claim 7, wherein the cleaning takes place by flocculation and sedimentation.

9. Method as claimed in claims 1-8, wherein the reducing agent contains a sulphite, such as sodium sulphite.

10. Plant for removing mercury impurities from metal, comprising:
- a treatment tank for treating the metal;
- means for treating the metal with liquid containing a reducing agent and with rinsing liquid; and
- tanks for receiving the liquid containing a reducing agent and the rinsing liquid.

11. Plant as claimed in claim 10, comprising means for performing an electrolysis in the treatment tank.

12. Plant as claimed in claim 10 or 11, wherein the treatment means comprise spraying means for spraying liquid on the metal.

13. Plant as claimed in claims 10-12, wherein the treatment means comprise means for immersing the metal in the liquid containing a reducing agent.

14. Method as claimed in claims 1-9 or plant as claimed in claims 10-13, wherein the metal comprises metal scrap, liquid tanks, such as for natural gas condensate, gas compressor parts.

15. Method or plant as claimed in claim 14, wherein the metal comprises the inner wall of a tank in which the cleaning method is performed.

## Patentansprüche

1. Verfahren zum Entfernen von Quecksilberverunreinigungen von Metall, das die Schritte umfasst:
- Behandeln der Metalloberfläche mit einer Flüssigkeit, die ein reduzierendes Mittel enthält; und
- Abwaschen des behandelten Metalls.

2. Verfahren wie in Anspruch 1 beansprucht, wobei das Metall in die Flüssigkeit, die ein reduzierendes Mittel enthält, eingetaucht wird.

3. Verfahren wie in Anspruch 1 oder 2 beansprucht, wobei das Metall mit der Flüssigkeit, die ein reduzierendes Mittel enthält, besprüht wird.

4. Verfahren wie in den Ansprüchen 1-3 beansprucht, wobei die Flüssigkeit, die ein reduzierendes Mittel enthält, eine Temperatur von 30-100°C, zum Beispiel 60-95°C, bevorzugter 75-90°C, hat.

5. Verfahren wie in den Ansprüchen 1-4 beansprucht, wobei das mit dem reduzierenden Mittel behandelte Metall einer Elektrolyse unterzogen wird.

6. Verfahren wie in Anspruch 5 beansprucht, wobei die Elektrolyse bei einer negativen Spannung von -10 bis -80 V, bevorzugt -20 bis -60 V, bevorzugter -30 bis -50 V für bevorzugt 5-60 Minuten, bevorzugter 10-50 Minuten, wie z.B. 10-30 Minuten, durchgeführt wird.

7. Verfahren wie in den Ansprüchen 1-6 beansprucht, wobei die Flüssigkeit, die ein reduzierendes Mittel enthält, und die Waschflüssigkeit gereinigt und wieder verwendet werden.

8. Verfahren wie in Anspruch 7 beansprucht, wobei die Reinigung durch Ausflockung und Sedimentation erfolgt.

9. Verfahren wie in den Ansprüchen 1-8 beansprucht, wobei das reduzierende Mittel ein Sulfit, wie Natriumsulfit, enthält.

10. Eine Anlage zum Entfernen von Quecksilberverunreinigungen von Metall, die umfasst:
- einen Behandlungsbehälter zum Behandeln des Metalls;
- Mittel zur Behandlung des Metalls mit Flüssigkeit, die ein reduzierendes Mittel enthält, und mit Waschflüssigkeit; und
- Behälter zum Aufnehmen der Flüssigkeit, die ein reduzierendes Mittel enthält, und der Waschflüssigkeit.

11. Anlage wie in Anspruch 10 beansprucht, die Mittel zur Durchführung einer Elektrolyse im Behandlungstank umfasst.

12. Anlage wie in Anspruch 10 oder 11 beansprucht, wobei die Behandlungsmittel Sprühmittel zum Aufsprühen von Flüssigkeit auf das Metall umfassen.

13. Anlage wie in den Ansprüchen 10-12 beansprucht, wobei die Behandlungsmittel Mittel zum Eintauchen des Metalls in die Flüssigkeit, die ein reduzierendes Mittel enthält, umfassen.

14. Verfahren wie in den Ansprüchen 1-9 beansprucht oder Anlage wie in den Ansprüchen 10-13 beansprucht, wobei das Metall Metallschrott, Flüssigkeitsbehälter, wie z.B. für Erdgaskondensat, und Gaskompressorteile umfasst.

15. Verfahren oder Anlage wie in Anspruch 14 beansprucht, wobei das Metall die Innenwand eines Tanks, in welchem das Reinigungsverfahren durchgeführt wird, umfasst.

## Revendications

1. Procédé d'élimination d'impuretés de mercure d'un métal, comprenant les étapes consistant à :
- traiter la surface du métal avec un liquide contenant un agent réducteur ; et
- rincer le métal traité.

2. Procédé selon la revendication 1, dans lequel le métal est immergé dans le liquide contenant un agent réducteur.

3. Procédé selon la revendication 1 ou 2, dans lequel il est pulvérisé sur le métal le liquide contenant un agent réducteur.

4. Procédé selon les revendications 1 à 3, dans lequel le liquide contenant un agent réducteur a une température de 30 à 100°C, par exemple, de 60 à 95°C, plus préférablement de 75 à 90°C.

5. Procédé selon les revendications 1 à 4, dans lequel le métal traité avec l'agent réducteur est soumis à une électrolyse.

6. Procédé selon la revendication 5, dans lequel l'électrolyse est effectuée à une tension négative de -10 à -80 V, de préférence de -20 à -60 V, plus préférablement de -30 à -50 V pendant, de préférence, de 5 à 60 minutes, plus préférablement de 10 à 50 minutes, par exemple, de 10 à 30 minutes.

7. Procédé selon les revendications 1 à 6, dans lequel le liquide contenant un agent réducteur et le liquide de rinçage sont nettoyés et réutilisés.

8. Procédé selon la revendication 7, dans lequel le nettoyage est effectué par floculation et sédimentation.

9. Procédé selon les revendications 1 à 8, dans lequel l'agent réducteur contient un sulfite, tel que le sulfite de sodium.

10. Unité pour éliminer des impuretés de mercure d'un métal, comprenant :
- une cuve de traitement pour traiter le métal ;
- des moyens pour traiter le métal avec un liquide contenant un agent réducteur et avec un liquide de rinçage ; et
- des cuves pour recevoir le liquide contenant un agent réducteur et le liquide de rinçage.

11. Unité selon la revendication 10, comprenant un moyen pour effectuer une électrolyse dans la cuve de traitement.

12. Unité selon la revendication 10 ou 11, dans lequel les moyens de traitement comprennent un moyen de pulvérisation pour pulvériser le liquide sur le métal.

13. Unité selon les revendications 10 à 12, dans lequel les moyens de traitement comprennent un moyen pour immerger le métal dans le liquide contenant un agent réducteur.

14. Procédé selon les revendications 1 à 9 ou unité selon les revendications 10 à 13, dans lesquels le métal comprend de la ferraille, des citernes de liquide, par exemple, pour du gaz naturel condensé, des pièces de compresseur de gaz.

15. Procédé ou unité selon la revendication 14, dans lequel le métal comprend la paroi interne d'une cuve dans laquelle le procédé de nettoyage est effectué.
